# DEMANDE DE BREVET EUROPEEN

(11) **EP 2 485 166 A1**
(43) Date de publication de la demande: **08.08.2012**
(21) Numéro de dépôt: 12154060.3
(22) Date de dépôt: 06.02.2012
(51) Int. Cl.: G06F 17/30, H04N 5/445, H04N 7/16, H04N 7/173

(54) **Acquisition d'un contenu complémentaire relatif à un contenu principal en cours de restitution par un équipement connecté à un réseau**

(30) Priorité: 08.02.2011 FR 1150986
(71) Demandeur: FRANCE TELECOM, 75015 Paris (FR)
(72) Inventeur: VINCENT, Yoann, 94230 Cachan (FR); GUAZZETTI, Manuel, 78220 Viroflay (FR)

(57) **Abrégé**

Durant la restitution du contenu principal, l'équipement propose à un utilisateur au moins un fournisseur de contenus complémentaires accessible à travers le réseau. Suite à la sélection par l'utilisateur du fournisseur proposé, l'équipement déclenche automatiquement l'exécution d'une recherche auprès dudit fournisseur de contenus sélectionné, la recherche étant basée sur au moins une donnée descriptive relative au contenu et extraite par l'équipement d'un ensemble de données descriptives relatives au contenu. L'équipement restitue ensuite un contenu complémentaire correspondant au résultat de la recherche exécutée auprès du fournisseur de contenus sélectionné.

## Description

La présente invention concerne un procédé d'acquisition d'un contenu complémentaire relatif à un contenu principal en cours de visualisation par un utilisateur sur un équipement.

Lorsqu'un utilisateur regarde un contenu, tel que par exemple un programme TV, sur un équipement et souhaite obtenir des informations complémentaires sur ce contenu, une solution connue consiste pour l'utilisateur à accéder à un site Internet susceptible de lui fournir ces informations complémentaires en utilisant un ordinateur muni d'un navigateur Internet et connecté à Internet, et de lancer une recherche sur ce site avec des mots clés saisis manuellement par l'utilisateur.

Une telle solution s'avère cependant complexe et peu confortable pour l'utilisateur, qui doit cesser momentanément de regarder le contenu principal pour réaliser la recherche. La présente invention vise à améliorer la situation.

A cet effet, l'invention concerne un procédé d'acquisition d'un contenu complémentaire relatif à un contenu vidéo principal en cours de restitution par un équipement connecté à un réseau, dans lequel
- durant la restitution du contenu vidéo principal, l'équipement propose à un utilisateur une pluralité de fournisseurs de contenus complémentaires accessibles à travers le réseau;
- suite à la sélection par l'utilisateur de l'un des fournisseurs proposés, l'équipement déclenche automatiquement l'exécution d'une recherche auprès dudit fournisseur de contenus sélectionné, la recherche étant basée sur au moins une donnée descriptive relative au contenu vidéo principal et extraite par l'équipement d'un ensemble de données descriptives relatives au contenu vidéo principal;
- l'équipement restitue un contenu complémentaire correspondant au résultat de la recherche exécutée auprès du fournisseur de contenus sélectionné.

L'invention permet à l'utilisateur par simple sélection de l'un des fournisseurs de contenus proposés de lancer une recherche auprès de ce fournisseur de contenus sélectionné, sans saisir d'informations manuellement. Les informations utilisées pour formuler la requête de recherche sont extraites de données descriptives relatives au contenu vidéo principal. Il peut par exemple s'agir de métadonnées associées au contenu vidéo principal.

Dans un mode de réalisation particulier, la sélection du fournisseur de contenus par l'utilisateur déclenche l'envoi automatique d'une première requête de recherche vers un moteur de recherche du réseau. Grâce à cela, l'équipement n'a pas besoin d'être doté d'un moteur de recherche. Il utilise des ressources disponibles dans le réseau.

Avantageusement, la première requête de recherche envoyée au moteur de recherche indique le fournisseur de contenus sélectionné par l'utilisateur et ladite donnée descriptive relative au contenu. Ainsi, le moteur de recherche peut lancer une recherche basée sur la donnée descriptive présente dans la première requête auprès du fournisseur sélectionné et indiqué dans la première requête.

Dans un mode de réalisation particulier, l'équipement proposant à l'utilisateur une pluralité de fournisseurs de contenus, lesdits fournisseurs de contenus proposés sont sélectionnés en fonction de données descriptives relatives au contenu. Lesdites données descriptives associées au contenu, en fonction desquelles les fournisseurs de contenus proposés sont sélectionnés, peuvent comprendre un nom de chaîne TV de diffusion du contenu et/ou un genre de contenu, dans le cas où le contenu principal est un programme TV. Ainsi, selon la chaîne TV de diffusion du contenu principal et/ou selon le genre du contenu (film, série, documentaire, etc.), les fournisseurs de contenus proposés à l'utilisateur sont adaptés.

L'invention concerne aussi un équipement de restitution d'un contenu vidéo principal et d'acquisition d'un contenu complémentaire relatif au contenu vidéo principal, comprenant
- des moyens de connexion à un réseau,
- des moyens de restitution de contenus,
- des moyens pour proposer à un utilisateur, pendant la restitution du contenu principal, une pluralité de fournisseurs de contenus complémentaires du réseau,
- des moyens de sélection par un utilisateur de l'un des fournisseurs de contenus proposés et
- des moyens pour déclencher automatiquement l'exécution d'une recherche auprès du fournisseur de contenus sélectionné, la recherche étant basée sur au moins une donnée descriptive relative au contenu et extraite par l'équipement d'un ensemble de données descriptives relatives au contenu, suite à la sélection de l'un des fournisseurs de contenus proposés;
- les moyens de restitution de contenus étant adaptés pour restituer le contenu complémentaire correspondant au résultat de la recherche exécutée auprès du fournisseur de contenus sélectionné.

L'invention sera mieux comprise à l'aide de la description suivante d'un mode de réalisation particulier du procédé d'acquisition d'un contenu complémentaire relatif à un contenu principal et de l'équipement, selon différents modes de réalisation de l'invention, en référence aux dessins annexés sur lesquels :
- la figure 1 représente une vue schématique d'un système pour la mise en oeuvre du procédé, selon un premier mode de réalisation particulier de l'invention;
- la figure 2 représente un organigramme du procédé, selon le premier mode de réalisation;
- les figures 3A et 3B représentent deux écrans d'affichage d'un équipement d'utilisateur de la figure 1;
- la figure 4 représente une vue schématique d'un système pour la mise en oeuvre du procédé, selon un deuxième mode de réalisation particulier de l'invention;
- la figure 5 représente un organigramme du procédé, selon le deuxième mode de réalisation;
- la figure 6 représente un schéma bloc fonctionnel d'un équipement utilisateur du système de la figure 1;
- la figure 7 représente un schéma bloc fonctionnel d'un équipement utilisateur du système de la figure 4.

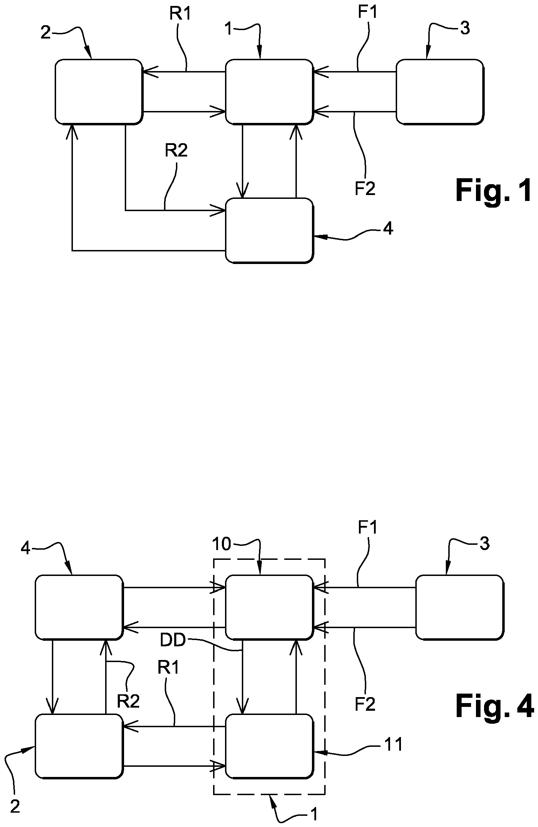

Sur la figure 1, on a représenté un équipement d'utilisateur 1 de réception et de restitution de contenus, un moteur de recherche 2, un serveur 3 de diffusion de contenus et plusieurs sites Internet d'informations S d'un réseau de communication, ici l'Internet. Par souci de clarté, un seul site d'informations S, référencé 4, est représenté sur la figure 1.

Dans l'exemple particulier décrit ici, le serveur 3 est un serveur IPTV apte à diffuser des programmes TV d'un bouquet de chaînes de télévision TV à travers l'Internet. Lors de la transmission d'un programme TV, le serveur 3 transmet un flux TV FI comprenant des données de programme TV et, concomitamment, un flux F2 de données descriptives DD, ou métadonnées, relatives au programme TV. Les données descriptives DD relatives au programme TV en cours de transmission comprennent notamment :
- le nom de la chaîne de télévision diffusant le flux F1,
- le titre du programme TV du flux F1 et
- le genre du programme TV du flux F1.

L'équipement de réception 1 est, dans l'exemple particulier décrit ici, une tablette tactile, telle que par exemple une tablette iPad© d'Apple, apte à se connecter à l'Internet. L'équipement 1 est ici connecté à l'Internet par l'intermédiaire d'une passerelle domestique de connexion à l'Internet à laquelle l'équipement 1 est connecté, par exemple par une connexion sans fil wifi. On pourrait envisager tout autre moyen de connexion à l'Internet.

Le moteur de recherche 2 est hébergé par un site Internet. Dans l'exemple particulier décrit ici, il s'agit du moteur de recherche bing©. On pourrait bien entendu utiliser tout autre moteur de recherche disponible sur un réseau. Par exemple, il peut s'agir d'un autre moteur de recherche de l'Internet, un moteur de recherche d'un réseau local domestique connecté à la passerelle. Le moteur de recherche pourrait également être implémenté dans l'équipement 1 lui-même.

Les sites d'informations S comprennent, de façon non exhaustive :
- les sites de chaînes de télévision, ici les sites de TF1, France 2, France 3, etc.;
- au moins un site d'informations cinématographiques, par exemple le site AlloCiné©;
- au moins un moteur de recherche de l'Internet, ici bing© et Google©;
- au moins une encyclopédie universelle de l'Internet, ici Wikipédia©;
- au moins un site d'informations sportives, ici un site de football vvw.football.fr et un site généraliste de sport www.sport24.com.

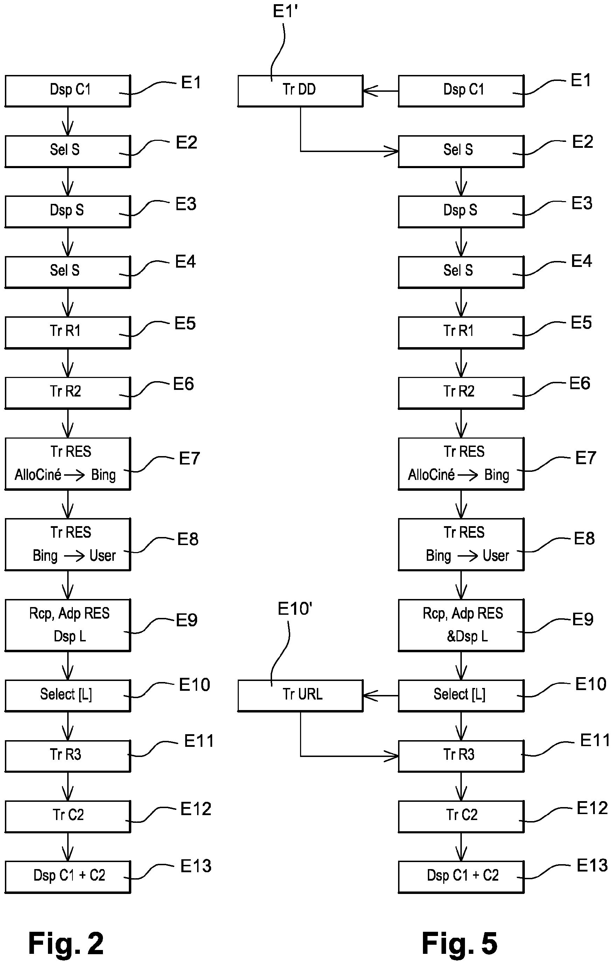

Le procédé d'acquisition d'un contenu complémentaire C2 relatif à un contenu principal C1 en cours de restitution par l'équipement 1 connecté à l'Internet, va maintenant être décrit, en référence à la figure 2, selon un premier mode de réalisation particulier.

Dans l'exemple particulier décrit ici, le contenu principal C1 en cours de restitution par l'équipement 1 est un feuilleton de la série TV "Docteur House" diffusé par la chaîne TF1.

Le serveur IPTV 3 transmet un flux F1 de données de programme, comprenant les données du contenu C1, à savoir le feuilleton de la série "Docteur House", et un flux F2 de données descriptives relatives à ce feuilleton. Les données descriptives contenues dans le flux F2 contiennent notamment le nom de la chaîne diffusant le programme TV, ici "TF1 ", le titre du programme TV, ici "Docteur House", et le genre du programme, ici "série".

L'équipement 1 reçoit les deux flux F1 et F2 et restitue le flux de données du contenu principal C1, c'est-à-dire le feuilleton "Docteur House", par affichage sur un écran 23, lors d'une étape E1. Par ailleurs, en fonction de la chaîne TV et du genre du programme indiqués dans les données descriptives du flux F2, l'équipement 1 sélectionne des sites d'informations S de l'Internet lors d'une étape E2. En l'espèce, l'équipement 1 sélectionne les sites suivants :
- le site de la chaîne TF1;
- le site d'informations cinématographiques AIloCiné©;
- le moteur de recherche Internet bing© et
- l'encyclopédie Internet Wikipédia©.

La sélection des sites d'informations sélectionnés par l'équipement 1 lors de l'étape E2 dépend ici du genre du contenu (film, documentaire, sport, série, etc.) et de la chaîne TV d'émission, ces informations étant extraites des données descriptives relatives au contenu principal C1. Cette sélection pourrait dépendre d'autres données descriptives associées au contenu principal C1.

Dans le cas où le contenu principal est un match de foot diffusé par la chaîne TF1, les sites suivants peuvent être proposés :
- le site de la chaîne TF1;
- un site de football, par exemple www.football.fr;
- un site généraliste de sport, par exemple www.sport24.com;
- le moteur de recherche Internet bing© et
- l'encyclopédie Internet Wikipédia©.

Dans le cas où le contenu principal est un film, par exemple "Un hiver à Central Park", diffusé par la chaîne Canal+, les sites suivants peuvent être proposés :
- le site de la chaîne Canal+;
- le site d'informations cinématographiques AlloCiné©;
- le moteur de recherche Internet bing© et
- l'encyclopédie Internet Wikipédia©.

Dans le cas où le contenu principal est un magazine télévisé, par exemple le magazine "Thalassa" diffusé par la chaîne France 3, les sites suivants peuvent être proposés :
- le site de la chaîne France 3;
- le moteur de recherche Internet bing© et
- l'encyclopédie Internet Wikipédia©.

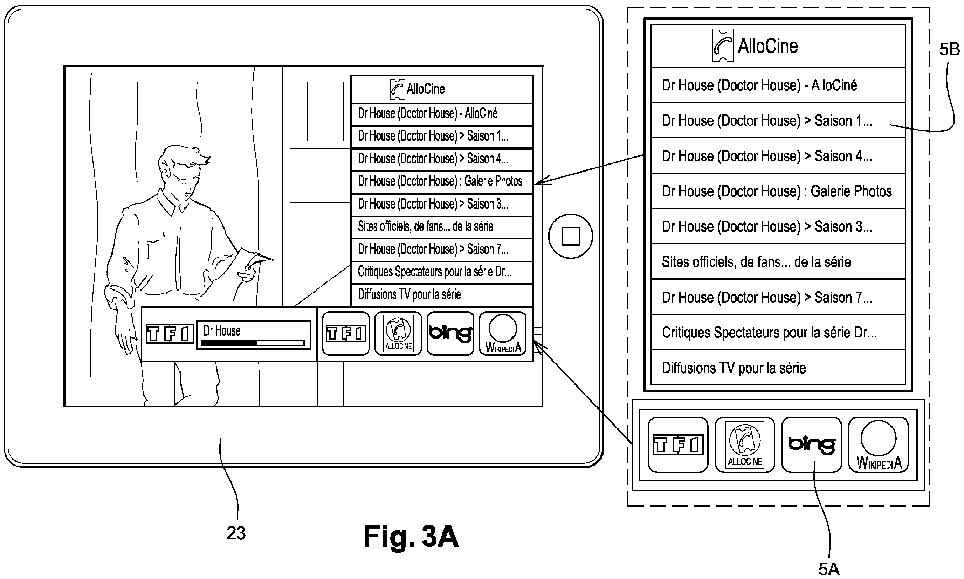

Suite à l'activation par l'utilisateur d'une commande d'affichage d'informations relatives au contenu C1 en cours d'affichage par l'équipement 1, celui-ci propose à l'utilisateur les quatre sites mentionnés ci-dessus, par affichage ici de quatre icônes représentant ces quatre sites, superposés au contenu C1 (les quatre icônes sont représentés sur la figure 3A en bas à droite de l'écran), sur l'écran 23, lors d'une étape E3. Sur la figure 3A, la référence 5A désigne une vue zoomée des quatre icônes.

L'utilisateur sélectionne l'un des sites proposés ici par appui sur l'icône de ce site affiché sur l'écran tactile de l'équipement 1, lors d'une étape E4. A titre d'exemple illustratif, on suppose ici que l'utilisateur sélectionne le site AlloCine.fr©. La sélection de ce site S par l'utilisateur déclenche automatiquement la génération et l'envoi à travers l'Internet, par l'équipement 1, d'une requête R1 de recherche d'informations, lors d'une étape E5, sans action supplémentaire de l'utilisateur. Cette requête de recherche R1 est configurée pour lancer une recherche basée sur le titre du contenu principal C1 en cours de visualisation, ici "Docteur House", sur le site sélectionné, ici AlloCine.fr©, par l'intermédiaire d'un moteur de recherche de l'Internet, ici le moteur de recherche Bing© 2. Le titre du contenu C1 est obtenu par l'équipement 1, sans intervention de l'utilisateur, par extraction des données descriptives du flux F2 reçu. Dans l'exemple particulier décrit ici, la requête R1 a la forme d'une requête url vers le site Internet hébergeant le moteur de recherche bing© Elle contient donc:
- dans une partie principale de la requête url, l'indication du moteur de recherche à utiliser, ici "bing.com", et
- dans une partie d'extension de la requête url, des informations sur l'objet de la recherche à réaliser, à savoir "search?q=site%3Allocine.fr+dr+house", comprenant le nom du site sur lequel la recherche doit être réalisée, à savoir AlloCine.fr, et l'information recherchée, à savoir "Docteur House".

### La requête R1 peut par exemple être de la forme :

### http://www.bing.com/search?q=site%3Allocine.fr+dr+house&format=rss

On soulignera que cette requête R1 précise également le format requis pour le résultat de la recherche, à savoir ici le format RSS. On pourrait envisager tout autre format.

Le moteur de recherche 2 reçoit la requête de recherche R1 puis, lors d'une étape E6, génère et envoie une deuxième requête de recherche R2 vers le site Allocine.fr, à travers l'Internet, afin de requérir une recherche sur le site Allocine.fr avec le titre du programme regardé (Docteur House).

Le résultat de la recherche est transmis par le site d'informations Allocine.fr au moteur de recherche bing, lors d'une étape E7. Lors d'une étape E8, le site du moteur bing retransmet ce résultat vers l'équipement 1, à travers l'Internet, en format RSS.

Lors d'une étape E9, l'équipement 1 reçoit le résultat de la recherche RES comprenant un ensemble d'informations, adapte le format de ces informations sous la forme d'une liste d'éléments L. Ces différents éléments peuvent correspondre aux intitulés des différents éléments de réponse fournis par le site Allocine.fr en réponse à la recherche réalisée sur la base de la donnée descriptive "Docteur House". L'équipement 1 affiche ensuite cette liste L sur son écran 23. Sur la figure 3A, la référence 5B désigne une vue zoomée de la liste L d'éléments de réponse. Chaque élément de la liste affichée L est associé en mémoire, dans l'équipement 1, à une adresse url vers un contenu complémentaire C2 disponible auprès du site Allocine.fr. La liste de résultats L s'affiche en superposition du programme TV en cours de visualisation, comme représenté sur la figure 3A.

Lors d'une étape E10, l'utilisateur sélectionne un élément de la liste L de résultats affichée. La sélection de cet élément déclenche l'envoi de la requête url R3 associée à l'élément sélectionné vers le site Allocine.fr lors d'une étape E11.

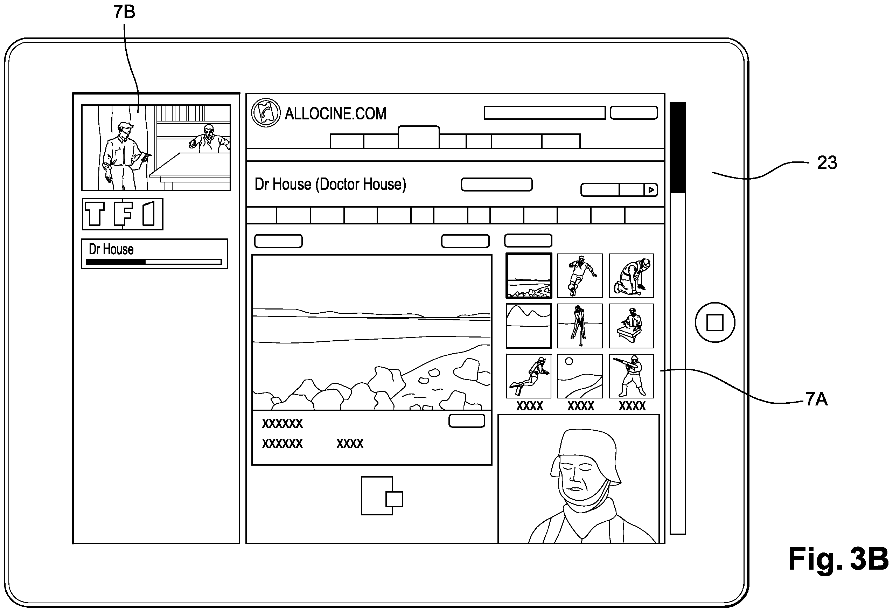

Lors d'une étape E12, en réponse à la requête R3, le site Allocine.fr transmet le contenu complémentaire C2 requis à l'équipement 1. En l'espèce, le contenu C2 est une page web d'informations du site Allocine.fr. Il pourrait s'agir d'un autre type de contenu, comme par exemple d'un contenu vidéo, musical ou autre. L'équipement 1 affiche la page web reçue, référencée 7A sur la figure 3B, sur son écran 23, lors d'une étape E13. Cette page web constitue un contenu complémentaire C2 associé au contenu principal C1, c'est-à-dire ici le feuilleton "Docteur House" en cours de restitution sur l'écran 23. Lors de l'étape E13, le contenu complémentaire C2 7A occupe une partie principale de l'écran 23, tandis que le contenu principal C1 7B (ici le feuilleton "Docteur House") occupe une partie réduite de l'écran 23, ici située en haut à gauche de l'écran, comme représenté sur la figure 3B. Ainsi, la restitution par affichage du contenu complémentaire C2 provoque une diminution de la zone d'affichage du contenu principal C1. Dans l'exemple particulier décrit ici, le contenu C1 7B passe en mode PiP (Picture in Picture) sur l'écran 23 de l'équipement 1 lorsque le contenu complémentaire C2 7A s'affiche.

Dans un deuxième mode de réalisation, l'équipement utilisateur 1 comprend un dispositif 10 de réception et de restitution de contenus, ici des contenus audiovisuels TV, que l'on appellera par la suite "dispositif TV", et un terminal mobile 11. Par souci de clarté, les éléments et étapes de ce deuxième mode de réalisation portent les mêmes références que les éléments et étapes du premier mode de réalisation.

En référence à la figure 4, le dispositif TV 10 et le terminal mobile 11 sont agencés pour communiquer l'un avec l'autre, soit directement, soit par l'intermédiaire d'une passerelle ici résidentielle. Le terminal mobile 11 comprend une application de télécommande permettant de télécommander le dispositif TV 10, par exemple pour changer de chaîne, régler le volume sonore, consulter un guide des programmes TV, consulter des informations sur un contenu audiovisuel, ou programme TV, en cours de restitution, etc.

Le dispositif TV 10 est connecté à un réseau de communication, ici l'Internet, et est équipé d'un navigateur Internet. En référence à la figure 5, lors d'une étape E1, le dispositif 10 reçoit un contenu audiovisuel principal C1 en provenance du serveur IPTV 3 et le restitue par affichage sur son écran. Le contenu C1 est ici un feuilleton de la série "Docteur House". Pour la réception de ce contenu principal C1, le dispositif TV 10 reçoit le flux F1 de données de programme TV et le flux F2 de données descriptives DD relatives au programme TV, en provenance du serveur IPTV 3. Dans l'exemple particulier décrit ici, le contenu C1 en cours de restitution sur le dispositif TV 10 est un feuilleton de la série "Docteur House".

Sur commande d'un utilisateur, le terminal mobile 11 transmet au dispositif 10 une requête d'informations sur le contenu C1 en cours de restitution. Lors d'une étape El', en réponse à cette requête, le dispositif TV 10 transmet au terminal mobile 11 les données descriptives DD relatives au contenu C1 issues du flux F2. Ces données descriptives DD comprennent le nom de la chaîne de télévision, le titre du contenu C1 et le genre du contenu C1 .

Les étapes E2 à E12 précédemment décrites sont ensuite mises en oeuvre. Les étapes suivantes sont mises en oeuvre au niveau du terminal mobile 11:
- étape E2 de sélection d'un groupe de sites à proposer à l'utilisateur
- étape E3 d'affichage d'icônes représentant les sites sélectionnés,
- étape E4 de sélection de l'un des sites proposés par un utilisateur,
- étape E5 de génération et d'envoi de la requête R1 au moteur de recherche,
- étape E8 de réception par le terminal mobile 11 de résultats de recherche fournis par le site d'informations,
- étape E9 de réception, d'adaptation de format et d'affichage d'une liste L d'éléments de résultat de recherche sur le terminal mobile 11;
- étape E10 de sélection d'un élément de la liste L de résultats de recherche affichée sur l'écran du terminal 11.

Sur sélection d'un élément de la liste L, le terminal mobile 11 transmet au dispositif 10 le lien URL associé à l'élément sélectionné, lors d'une étape E10'. C'est ensuite le dispositif 10 qui, lors d'une étape E11, envoie la requête URL R3 vers le site d'informations AlloCine.fr pour obtenir le contenu complémentaire C2 associé au contenu principal C1 en cours de visualisation sur le dispositif TV 10. Lors d'une étape E12, le site d'informations Allocine.fr transmet au dispositif 10 le contenu complémentaire C2 requis, en l'espèce une page WEB d'informations. Le dispositif 10 affiche le contenu complémentaire reçu C2 et, de façon concomitante, le contenu principal C1, lors d'une étape E13. Comme précédemment indiqué, le contenu principal en cours de visualisation passe alors en mode PiP.

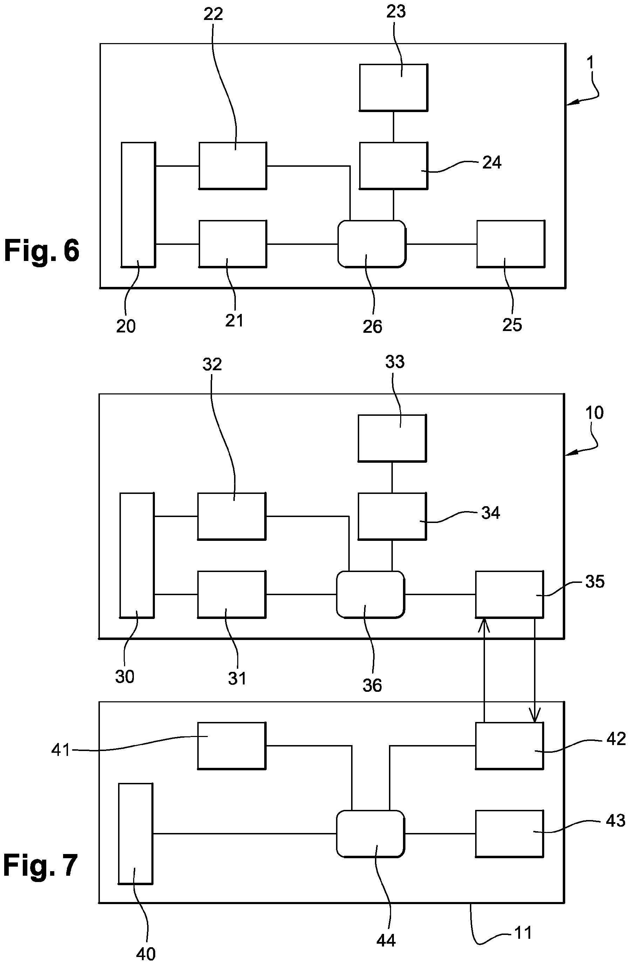

En référence à la figure 6, on va maintenant décrire l'équipement 1 apte à mettre en oeuvre le procédé précédemment décrit selon le premier mode de réalisation.

L'équipement 1 comprend
- une interface réseau 20;
- un module 21 de réception d'un flux de données d'un contenu principal (par exemple un programme TV) et d'un flux de données descriptives relatives à ce contenu principal ;
- un navigateur Internet 22;
- des moyens d'interface utilisateur comprenant notamment un écran d'affichage tactile 23 muni de haut-parleurs;
- un module 24 de pilotage de la restitution à l'écran 23;
- un module 25 d'acquisition d'un contenu complémentaire relatif à un contenu principal,
- une unité centrale de commande 26, à laquelle tous les éléments de l'équipement 1 sont reliés, apte à commander tous ces éléments.

Une télécommande, non représentée, est adaptée pour commander l'équipement 1.

Le module d'acquisition 25 est un module logiciel comprenant les instructions de programme pour commander l'exécution des étapes ci-dessous, précédemment décrites, lorsque ces instructions sont exécutées par un processeur de l'équipement 1 :
- étapes E2 à E4 de sélection de sites à proposer à l'utilisateur, d'affichage de ces sites et de sélection de l'un d'eux par un utilisateur,
- étape E5 de génération et d'envoi d'une requête de recherche R1 au moteur de recherche;
- étapes E8 et E9 de réception d'un résultat de la recherche, d'adaptation du format de visualisation de ce résultat sous la forme d'une liste d'éléments à sélectionner et d'affichage de cette liste d'éléments,
- étape E10 de sélection d'un élément de la liste;
- étape E11 d'envoi d'une requête URL associée à l'élément sélectionné pour obtenir un contenu complémentaire;
- étapes E12 et E13 de réception et d'affichage du contenu complémentaire requis.

En référence à la figure 7, on va maintenant décrire l'équipement 1, comprenant le dispositif TV 10 et le terminal mobile 11, apte à mettre en oeuvre le procédé précédemment décrit selon le deuxième mode de réalisation.

Le dispositif TV 10 comprend
- une interface réseau 30 de connexion au réseau Internet;
- un module 31 de réception d'un flux de données d'un contenu principal (par exemple un programme TV) et d'un flux de données descriptives relatives à ce contenu principal;
- un navigateur Internet 32;
- des moyens d'interface utilisateur comprenant des moyens de restitution de contenu comportant notamment un écran d'affichage 33;
- un module 34 de pilotage de la restitution sur l'écran 33;
- un module 35 de communication avec le terminal mobile 11 et
- une unité centrale de commande 36, à laquelle tous les éléments du dispositif 10 sont reliés, apte à commander tous ces éléments.

Le dispositif TV 10 est adapté pour mettre en oeuvre les étapes E11 d'envoi de la requête URL vers le site d'informations pour obtenir le contenu complémentaire sélectionné, et les étapes E12-E13 de réception et d'affichage de ce contenu complémentaire. Le module de communication 35 est notamment adapté pour transmettre au terminal mobile 11 des données descriptives associées à un contenu afin de mettre en oeuvre l'étape E1'.

Le terminal mobile 11 comprend
- une interface 40 de connexion au réseau mobile, permettant un accès à Internet via le réseau mobile;
- un navigateur Internet 41;
- un module 42 de communication avec le dispositif TV 10;
- un module 43 d'acquisition d'un contenu complémentaire relatif à un contenu principal et
- une unité centrale de commande 44, à laquelle tous les éléments du terminal 11 sont reliés, apte à commander tous ces éléments.

Le module 43 est un module logiciel comprenant les instructions de programme pour commander l'exécution les étapes suivantes, précédemment décrites, lorsque ces instructions sont exécutées par un processeur du terminal mobile 11 :
- étapes E2 à E4 de sélection de sites d'informations à proposer, d'affichage de ces sites et de sélection de l'un d'eux par un utilisateur,
- étape E5 de génération et d'envoi de la requête R1 au moteur de recherche Internet,
- étape E8 de transmission au terminal mobile 11 du résultat de la recherche fournie par le site d'informations sélectionné,
- étape E9 de réception, d'adaptation de format et d'affichage d'une liste d'éléments de résultat de recherche sur le terminal mobile 11
- étape E10 de sélection d'un élément de la liste et
- étape E10' de transmission au dispositif TV 10 du lien URL associé à l'élément sélectionné.

Dans la description qui précède, le contenu complémentaire est une page Web d'informations. Il pourrait s'agit d'un contenu complémentaire d'un autre type : contenu vidéo, contenu audio, etc. Quel que soit le type de contenu, l'équipement 1 de l'utilisateur le restitue à l'utilisateur après réception.

Dans l'exemple qui vient d'être décrit, le contenu principal est un programme TV qui est transmis à l'équipement 1 avec des données descriptives et restitué par l'équipement 1. En variante, le contenu principal peut être un contenu vidéo transmis depuis un serveur de contenus, par exemple en streaming ou par téléchargement, ou bien stocké sur un support de données accessible par l'équipement. Le support de données peut être un disque dur, une clé USB de stockage, un DVD ou autre. En toute hypothèse, le contenu vidéo est associé à des données descriptives. Ces données descriptives sont transmises par le serveur de contenus (dans le cas où le contenu est transmis depuis le serveur) ou bien stockées sur le support de données (dans le cas où le contenu est stocké dans ledit support).

## Revendications

1. Procédé d'acquisition d'un contenu complémentaire relatif à un contenu vidéo principal en cours de restitution par un équipement connecté à un réseau, dans lequel
- durant la restitution du contenu vidéo principal, l'équipement propose à un utilisateur une pluralité de fournisseurs de contenus complémentaires accessibles à travers le réseau;
- suite à la sélection par l'utilisateur de l'un des fournisseurs proposés, l'équipement déclenche automatiquement l'exécution d'une recherche auprès dudit fournisseur de contenus sélectionné, la recherche étant basée sur au moins une donnée descriptive relative au contenu vidéo principal et extraite par l'équipement d'un ensemble de données descriptives relatives au contenu vidéo principal;
- l'équipement restitue un contenu complémentaire correspondant au résultat de la recherche exécutée auprès du fournisseur de contenus sélectionné.

2. Procédé selon la revendication 1, dans lequel, la sélection du fournisseur de contenus par l'utilisateur déclenche l'envoi automatique d'une première requête de recherche vers un moteur de recherche du réseau.

3. Procédé selon la revendication 2, dans lequel la première requête de recherche envoyée au moteur de recherche indique le fournisseur de contenus sélectionné par l'utilisateur et ladite donnée descriptive associée au contenu.

4. Procédé selon la revendication 3, dans lequel le moteur de recherche transmet une deuxième requête de recherche au fournisseur de contenus indiqué dans la première requête.

5. Procédé selon la revendication 1, dans lequel la donnée descriptive sur laquelle est basée la recherche correspond au titre du contenu.

6. Procédé selon la revendication 1, dans lequel, l'équipement proposant à l'utilisateur une pluralité de fournisseurs de contenus, lesdits fournisseurs de contenus proposés sont sélectionnés en fonction de données descriptives associées au contenu.

7. Procédé selon la revendication 6, dans lequel lesdites données descriptives associées au contenu, en fonction desquelles les fournisseurs de contenus proposés sont sélectionnés, comprennent un nom de chaîne TV de diffusion du contenu et/ou un genre de contenu.

8. Procédé selon la revendication 1, dans lequel, le contenu principal et le contenu complémentaire étant restitués en même temps par affichage sur un écran, la zone d'affichage du contenu principal sur l'écran est réduite pendant la restitution du contenu complémentaire.

9. Equipement de restitution d'un contenu vidéo principal et d'acquisition d'un contenu complémentaire relatif au contenu vidéo principal, comprenant
- des moyens de connexion à un réseau,
- des moyens de restitution de contenus,
- des moyens pour proposer à un utilisateur, pendant la restitution du contenu vidéo principal, une pluralité de fournisseurs de contenus complémentaires du réseau,
- des moyens de sélection, par un utilisateur, de l'un des fournisseurs de contenus proposés et
- des moyens pour déclencher automatiquement l'exécution d'une recherche auprès du fournisseur de contenus sélectionné, suite à la sélection d'un fournisseur de contenus proposé, ladite recherche étant basée sur au moins une donnée descriptive associée au contenu vidéo principal et extraite par l'équipement d'un ensemble de données descriptives associées au contenu vidéo principal;
- les moyens de restitution de contenus étant adaptés pour restituer le contenu complémentaire correspondant au résultat de la recherche exécutée auprès du fournisseur de contenus sélectionné.

10. Equipement selon la revendication 9, comprenant un premier dispositif de restitution du contenu principal et un deuxième dispositif d'acquisition du contenu complémentaire, aptes à communiquer l'un avec l'autre, les moyens de sélection d'un fournisseur de contenus par un utilisateur et les moyens pour déclencher automatiquement l'exécution d'une recherche auprès du fournisseur de contenus sélectionné étant situés dans le deuxième dispositif, et le premier dispositif comprenant les moyens de restitution de contenu et étant adapté pour restituer le contenu principal et le contenu complémentaire.

11. Equipement selon la revendication 10, dans lequel le premier dispositif est adapté pour transmettre au deuxième dispositif des données descriptives relatives au contenu principal.

12. Dispositif d'acquisition d'un contenu complémentaire relatif à un contenu vidéo principal en cours de restitution sur un autre dispositif, comprenant
- des moyens de réception de données descriptives relatives à un contenu vidéo principal en cours de restitution par ledit autre dispositif, des moyens pour proposer à un utilisateur, pendant la restitution du contenu vidéo principal, au moins un fournisseur de contenus complémentaires du réseau,
- des moyens de sélection par un utilisateur, parmi une pluralité de fournisseurs de contenus, de l'un desdits fournisseurs de contenus et
- des moyens pour déclencher automatiquement l'exécution d'une recherche auprès du fournisseur de contenus sélectionné, la recherche étant basée sur au moins une donnée descriptive associée au contenu vidéo principal et extraite par le dispositif d'acquisition des données descriptives associées au contenu vidéo principal reçues, suite à la sélection par un utilisateur de l'un des fournisseurs de contenus proposés.

13. Programme d'ordinateur sur un support de données comprenant des instructions de programme pour mettre en oeuvre le procédé selon la revendication 1, lorsque ledit programme est exécuté par un ordinateur.
